# EUROPEAN PATENT APPLICATION

(11) **EP 1 669 127 A1**
(43) Date of publication of application: **14.06.2006**
(21) Application number: 04771371.4
(22) Date of filing: 06.08.2004
(51) Int. Cl.: B01D 63/08, B01D 61/50, B01D 29/05

(54) **SIMPLIFIED FILTER DEVICE**

(30) Priority: 08.08.2003 JP 2003289859; 04.08.2004 JP 2004228174
(71) Applicant: Entegris, Inc., Chaska, MN 55318 (US)
(72) Inventor: SUDO, Kazunori, c/o Nihon Mykrolis K.K., Minato-ku, Tokyo 1080073 (JP); OKA, Eiko, Yokohama-shi, Kanagawa 2300071 (JP)
(74) Representative: Gambell, Derek
(86) International application number: PCT/JP2004/011372
(87) International publication number: WO 2005/014148

(57) **Abstract**

A flow passage for passing a raw liquid to be processed therethrough that is used to test a separation membrane is of the simplest inline type (so-called "inline" type) and is the simplest in construction. In spite thereof, the separation membrane through which the raw liquid is going to be filtered is mounted in a direction substantially perpendicular to the flow passage. In view of this, the object of the present invention is to provide a filtering device with high filtering efficiency, which is used to test the membrane performance of this separation membrane and which enables exchanging its membrane in an easily removably attachable and quick way.

The simplified type filtering device that includes a bowl 1 having a discharging port 13 on one side thereof and having on the other side thereof an opening portion 2 in which the separation membrane is loaded, the separation membrane for filtering the raw liquid therethrough, a filter plate 5 by which this separation membrane is fixed to the bowl 1 and which has opening portions for passing the raw liquid or a filtered liquid therethrough, a head 3 having on one side thereof a convex pressing portion 23 that presses the filter plate 5 from one side to prevent the filtered liquid from being leaked and having on the other side thereof a raw liquid supplying opening 15, and means that fastens the head 3 onto the bowl 1 so that the head may be pressed against the bowl 1, such as female and male screws 19, 21 provided with respect to the head 3 and the bowl 1 and screw-engaged with each other, or a separate locking nut 33.

## Description

### TECHNICAL FIELD

The present invention relates to a filtering device that can serve as a filter for, from a liquid, filtering, separating, or refining a gel and other particulate and the like, and that can simply test the membrane performance of a filtering membrane, separation membrane, or refining membrane (hereinafter referred to as "a separation membrane") used for that filter.

The filter device according to the present invention can widely be used for filtering a small amount of material in order to make researches and developments, developing a resist, developing medicines, manufacture of beer, manufacture of medicines, purification of photoresist solution in the course of manufacturing a semiconductor or in other fields.

### BACKGROUND ART

There is a lot of demand for a filtering device that performs filtering, separation, and refinement of a small amount of raw liquid to be supplied. Also, to determine a separation membrane that is optimum to the liquid to be processed, it is necessary to evaluate the membrane performance of a separation membrane by processing a raw liquid that is to be processed by actually using the separation membrane. In the filtering device for performing filtering, separation, and refinement with respect to a small amount of raw liquid to be processed, when performing evaluation test for determining a separation membrane that is used or optimum, many separation membranes are used. However, in a conventional simplified type filtering device, only one sheet of separation membrane can at one time be used or tested. In a case where there is the need to use or evaluate one or more arbitrarily combined separation membranes, a plurality of filtering devices are used in series, or a separation membrane is tested by replacing every kind one by one. Thereby, the results obtained needed to be synthetically evaluated. Accordingly, in such a case, a large amount of time and labor was needed for assembling the separation membrane or replacing it with another one. A lengthy period of time was needed as the entire operation time and evaluation time.

There have hitherto been proposed the types that enable a plurality of separation membranes to be simultaneously tested. And, as this separation membrane testing device enabling a plurality of separation membranes to be simultaneously tested, there is, for example, the one that is disclosed in Japanese Patent Application Laid-Open No. 11-137973.

The separation membrane testing device described in the publication above is so arranged as to be able to test a plurality of separation membranes at one time by being equipped with four cylindrical and flat cells. The cells are vertically laminated together. Between each cell, different kinds of first to third separation membranes are mounted one by one. Processed raw liquid is supplied, in parallel, to the respective separation membranes to enable testing at one time the membrane performance of the first to third three separationmembranes. However, there is a problem that even this device, in a case where using a plurality of separation membranes in series, cannot perform evaluation of them. Also, in a case where using a plurality of separation membranes in series, it is necessary to use a plurality of filtering device in series.
Patent document No. 1: Japanese Patent Application Laid-Open No. 11-137973
Patent document No. 2: Japanese Patent Application Laid-Open No. 2002-046651

### DISCLOSURE OF THE INVENTION

### THE PROBLEMS THAT THE INVENTION IS TO SOLVE

However, in the case of the conventional device disclosed in Japanese Patent Application Laid-Open No. 11-137973, though it is impossible to have clear understanding of the technique since no disclosure is made of what the casing nearby is alike and what the relevant connection is alike, when considering a general construction of that device, the construction is complex and is difficult to miniaturize. Further, since a liquid to be processed is processed in parallel, the same type, or different types, of a plurality of membranes can certainly be tested simultaneously. However, in a case where attempting to enhance the filtering accuracy by using the same type, or different types, of a plurality of membranes that are disposed in series, it was impossible to observe the synthetic effect.

Also, the invention that improved the drawback of the above-described conventional example is disclosed in Japanese Patent Application Laid-Open No. 2002-046651. However, according to that invention, although when replacing the separation membrane that has been mounted it becomes possible to relatively easily and quickly perform replacing and disassembling the separation membrane, the structure is complex and it takes a fairly large amount of time to replace a plurality of membranes, such as an amount of time for making preparations for setting them to the device. For this reason, the problem that, in a case where replacing a single sheet of membrane, it takes a significantly lengthy period of time to replace. Also, in a case where the same type, or different types, of a plurality of separation membranes that have been disposed in series are tested, it is impossible to evaluate the synthetic effect resulting from the use of them. Also, in a case where evaluating the separation membranes disposed in series or using them in series, it was needed to use a plurality of separate filtering devices.

The present invention has been made in view of the above-described circumstances and has an object to provide a simplified filtering device for separate membrane which, despite the fact that the construction is simple, in a case where it is needed to perform testing of the membrane and perform a small amount of filtering, enables performing simple filtering, and which, even in the case of one ormore kinds of separation membranes, enables simple assembling of them and easily performing test of them without performing complex assembling and addition of the relevant parts and the like, and, in addition, enables performing easy and quick replacement and disassembling of the separation membranes. The object of the present invention especially resides in providing a filtering device that enables evaluating synthetic effects resulting from using the same type, or different types, of a plurality of separation membranes that are disposed in series.

### MEANS FOR SOLVING THE PROBLEMS

To attain the above object, the present invention has the following construction.
(1) The present invention provides a simplified type filtering device that includes a bowl having a discharging port on one side thereof and an opening portion, on the other side thereof, that is communicated with the discharging port, at least one piece of filter plate having retained therein or secured thereto a separation membrane permitting a raw unprocessed liquid to filter therethrough and having openings that permit the raw unprocessed liquid or a filtered liquid to pass therethrough, said at least one piece of filter plate being accommodated within the opening portion of the bowl, a head having on one side thereof a protruding pressing portion that presses said filter plate from one side thereof to prevent said filtered liquid from being leaked and having on the other side thereof a raw unprocessed liquid supplying port, and pressing means that presses the head toward the bowl.
(2) In a preferred embodiment, under the item (1) above, the bowl and head having respectively provided with respect thereto a female screw and male screw and the bowl and head are brought into screw engagement with each other, and by rotating the bowl and head relatively to each other, assembling and air-tight and liquid-tight seal are executed.
(3) In another preferred embodiment, under the items (1) or (2) above, the filter plate that has had said separation membrane retained therein or secured thereto is loaded in such a manner that more than one said filter plate is stacked one over another. Thereby, it becomes possible to perform filtering, separation, or refinement, or evaluation test based on using the same type, or different types, of a plurality of separation membranes.
(4) In another embodiment, the present invention provides a simplified type filtering device that includes a bowl having a discharging port on one side thereof and an opening portion, on the other side thereof, that is communicated with the discharging port, at least one piece of filter plate having retained therein or secured thereto a separation membrane permitting a raw unprocessed liquid to filter therethrough and having openings that permit the raw unprocessed liquid or a filtered liquid to pass therethrough, said at least one piece of filter plate being accommodated within the opening portion of the bowl, a head having on one side thereof a protruding pressing portion that presses the filter plate from one side thereof to prevent said filtered liquid from being leaked and having on the other side thereof a raw unprocessed liquid supplying port, and a locking nut that presses said head toward the bowl in their axial direction.
(5) In another preferred embodiment, under the item (4), each of said bowl and said locking nut has provided thereon screw portions, which are engaged with each other and, by rotating each of them relatively to each other to enable assembling the device and pressing in the axial direction.
(6) In another preferred embodiment, under the item (4) or (5) above, the filter plate that has the separation membrane is loaded in such a manner that more than one said filter plate is stacked one over another to make it possible to use the same type, ordifferent types, of a plurality of separation membranes.
(7) In another preferred embodiment, in order to make easy the screw-fastening action, in case of the item (2) above, on the outside surface of the bowl and on the outside surface of the head, there are provided plate-like protrusions, which can be used as a finger engager or tool engager.
(8) In case of (5), on the outside surface of the bowl there is provided a plate-like protrusion, which is used as a finger engager or tool engager.
(9) In case of (4) or (5), the locking nut can have finger-engaged handles provided at three positions of its outer-peripheral portion.
(10) Further, in case of the item (1) or (4), the filter plate has a circumferential protrusion, having a prescribed height, on a bottom surface thereof and, on the other hand, an inner bottom of the opening portion of the bowl has a circumferential groove that receives the circumferential protrusion, thereby pressing the filter plate against the bowl to thereby perform sealing.
(11) Further, in the item (1) or (4), a press ring having on an underside thereof at least one line of concentric protrusion, preferably a plurality of (three in this embodiment) lines of concentric protrusion is positioned on an upper surface of said at least one filter plate; on the upper surface side of the filter plate there is provided a flat surface extending over the entire circumference; and the concentric protrusion of the press ring is pressed onto the flat surface of the filter plate to thereby perform sealing.
(12) Further, in the item (11), the press ring has a flat surface on an upper surface side thereof; and onto the flat surface there is pressed a circumferential protrusion, having a prescribed height, which is provided on a lower surface side of the filter plate disposed on an upper side thereof, thereby seal is effected, or the protruding pressing portion of the head is pressed via an O-ring, thereby seal is effected.
   Also, the press ring has a peripheral edge portion that surrounds the flat surface on an upper side thereof; and the filter plate has a peripheral edge portion that surrounds the flat surface on the upper side thereof; and, whereby, when the press ring has been accommodated into a recessed press insertion portion of the filter plate, it is arranged that ones of the peripheral edge portions be fused to each other. Thereby, coupling and integration of the filter plate and press ring become possible with the result that attaching / detaching with respect to the filter housing become easy.
(13) Further, in the item (1) or (4), on an outer periphery of the filter plate there is provided a finger-engaged tab; and correspondingly thereto, the bowl has provided therein a guide groove for the finger-engaged tab.

### EFFECT OF THE INVENTION

As apparent from the foregoing description, according to the invention described under the item (1) above, the flow passage of the raw liquid to be processed is of the simplest straight-line type (so-called "inline" type) and therefore is the simplest in construction. In spite thereof, since the separation membrane through which filtering is going to be done is mounted in a direction substantially perpendicular to the flow passage, the filtering efficiency is good and, in addition, the separation membrane for testing the performance of it can be easily detached / attached and can also be quickly replaced.

An ordinary filter, unlesss pecifically processed, cannot be cleaned as is because its mechanical strength is weak. However, in case of the actual specification such as development of a resist and development of a medicine, the cartridge filters that have been cleaned with various kinds of medicines have hitherto been used. A filter plate fabricated according to the specification of the invention, in which the separation membrane is supported by fusion, etc., is taken out and cleaned after its use to become able to be re-used.

Also, according to the invention under the item (2) above, since the bowl and head are firmly sealed together by the fastening force of the screw portion, leakage and mixture of the filtered liquid can be prevented, and replacement and disassembling of the separation membrane can easily be quickly performed.

Also, according to the invention described under the item (3) above, since testing a plurality of membranes can easily be performed, it is possible to simply confirm in what manner the separation is done through the use of a plurality of membranes and what effect can be obtained therefrom. In addition, it is also possible to easily and quickly perform replacement, and disassembling /assembling of the separation membrane. In other words, even one type of a plurality of separation membranes, or multi-type of a plurality of separation membranes, can easily be assembled, therefore it is possible to perform testing of the separation membranes, or testing of the separation membranes the combination of that has been changed, very easily.

Also, according to the invention described under the item (4) above, since addition of the locking member enables more effectively performing sealing based on the use of the filter, bowl, and head, highly efficient filtering can be done. Regarding the detachment / attachment and its easiness when replacing the filter, the matter is the same as that of the invention described above.

Also, according to the invention described under the item (5) above, for the locking member, more specifically, there is used a locking nut and sealing based on using the filter, bowl, and head is effectively performed using ordinary screws. Therefore, reliable fastening and resulting effective filtering are realized. Regarding attachment / detachment and its easiness when replacing the filter, the same matter as that which applies to the above-described other invention applies.

Also, according to the invention described in the item (6), under the items (4) or (5) above, by superimposing the plurality of filter plates one over another, it is possible to make up a filtering device, which needed to be made large in size and multistage, into a simple construction. As a result of this, for example, the order in which filtering is performed, etc. become easily changeable to enable performing more effective filtering. Regarding detachment / attachment of the filter and its easiness when it is replaced, the same matter as that which applies to the above-described other invention applies. Accordingly, according to the present invention, in a case where performing testing or other filtering than that for it by filtering performed with a plurality of membranes, namely in a case where a small capacity is needed, it is possible to simply and easily apply the invention with respect thereto.

In a preferred embodiment described in the item (7) above, in case of the item (2) above, by providing on the outside surface of the bowl and on the outside surface of the head, respectively, plate-like protrusions, each of them can be used as a finger engager or tool engager. Thereby, the fastening operations become easy.

In the form under the item (8) above, by providing a plate-like protrusion on the outside surface of the bowl, it can be used as a finger engager or tool engager.

When, as in the form under the item (9) above, a finger-engaged handle is provided to each of three positions of the peripheral portion of the locking nut, detachment /attachment of the head become further facilitated.

In the form under the item (10), the filter plate has on its bottom surface a circumferential protrusion having a prescribed height, while in the inner bottom of the opening portion of the bowl there is formed a circumferential groove that receives therein the circumferential protrusion. By pressing the filter plate against the bowl, sufficient sealing can be obtained without needing to use the O-ring each time pressing is performed. Therefore, the operating efficiency is enhanced and the cost is reduced.

In the form described under the item (11) above, a press ring equipped, on its lower surface side, with at least one piece of concentric protrusion, preferably a plurality of concentric protrusions is located on the upper surface of said at least one sheet of filter plate. On the upper surface side of the filter plate there is provided a flat surface extending over the entire circumference, and the concentric protrusion of the press ring is pressed onto the flat surface of the filter plate to perform sealing. For this reason, even in a case where using a composite separation membrane including a separation membrane nonfusible to the filter plate, sealing becomes possible with use of the press ring. Sufficient sealing of the peripheral portion of the separation membrane can be performed without needing to use the O-ring each time the seal is needed. Therefore, the operating efficiency is enhanced and the cost is reduced.

In the form described under the item (12) above, the press ring has a flat surface on an upper surface side thereof. Onto this flat surface, there is pressed the circumferential protrusion of a prescribed height which is provided on the lower surface side of the filter plate that is disposed on the upside of that flat surface, thereby seal is effected. Therefore, it becomes possible to cause a plurality of filter plates to be superimposed without using the O-rings (however, in case of the press ring used on the uppermost portion, the protruding pressing portion of the head is pressed via the O-ring with respect thereto and thereby sealed.)

Also, the press ring has a peripheral edge portion surrounding the flat surface of its upper surface while the filter plate has a peripheral edge portion surrounding the flat surface of its upper surface. Thereby, it is arranged that when the press ring has been accommodated into the recessed portion of the filter plate, peripheral edge portions be fused to each other. Therefore, even the separation membrane nonfusible to the filter plate becomes able to be sealed and retained by coupling and integration between the filter plate and press ring.

In the embodiment described under the item (13), further in the item (1) or (4), on the outer-periphery of the filter plate there is provided a finger-engaged tab, and, correspondingly thereto, in the bowl there is provided a guide groove for the finger-engaged tab. However, since the flow passage permitting the raw liquid and filtered liquid to pass through it and the space outside the flow passage are isolated from each other by the sealing means that has been described above. Therefore, it becomes possible to increase the operating efficiency without being followed by anxiety about being contaminated from the outside.

### BEST MODE FOR CARRYING OUT THE INVENTION

While the invention will hereafter be explained on the basis of its preferred embodiments, this conventionally known type of material can be used therein as the material that can be used therefore.

For a separation membrane, an arbitrary finely pored separation membrane such as a PTFE, PE, PFA, PVDF, PSE, etc. can be taken up as those examples.

For a filter plate (holder) that retains or has fused thereto the separation membrane, an arbitrary kind of resin material such as a PP, PE, PFA, etc. can be taken up as those examples.

For a housing, conventionally known high-rigidity plastic materials or metals can be used.

### First embodiment

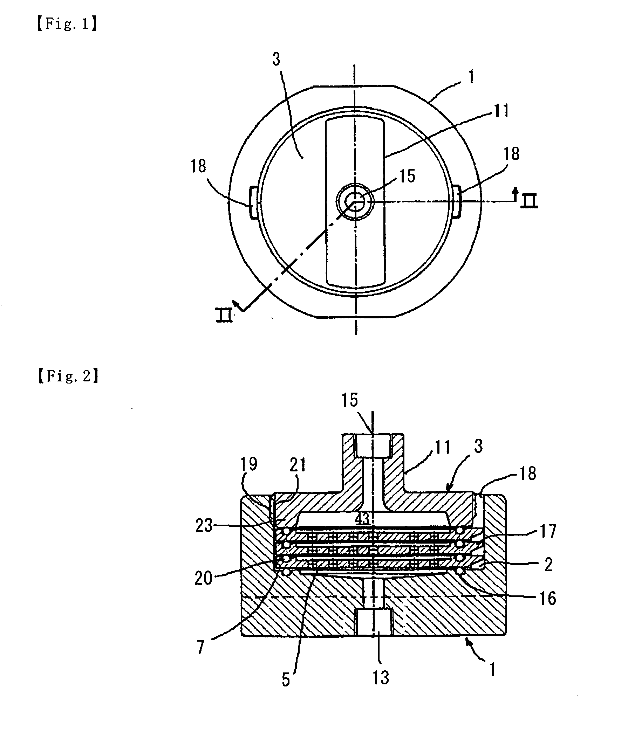

A simplified type filtering device according to a first embodiment of the present invention will now be explained with reference to Figs. 1 to 7. The vertical relationship between the components of each figure depends on the convenience of relevant explanation. Namely, the vertical relationship thereof may be inverted, or may be laid horizontal, or a raw liquid supplying port and a filtered liquid discharge port may be inverted from each other.

If referring to Figs. 1 to 6 and Fig. 7 that is a partly enlarged view of Fig. 2, the filtering device includes a bowl 1 (or cup) having in its lower surface a discharging port 13 from which a filtered liquid is discharged and having an opening portion 2 (or a recessed portion) in its upper surface, one or more filter plates 5 that are inserted into the opening portion 2 and are supported by a bottom portion of the opening portion, and a head 3 that is equipped with a shaped-like-an-annulus convex pressing portion 23 which in order to air-tightly or liquid-tightly seal the peripheral portion of the filter plate 5 presses this peripheral portion of the filter plate 5 toward the bottom portion of the opening portion, as well as with a raw liquid supplying port 15. As later described, in the filter plate 5, there is supported a separation membrane 25 (refer to Fig. 5 or 6).

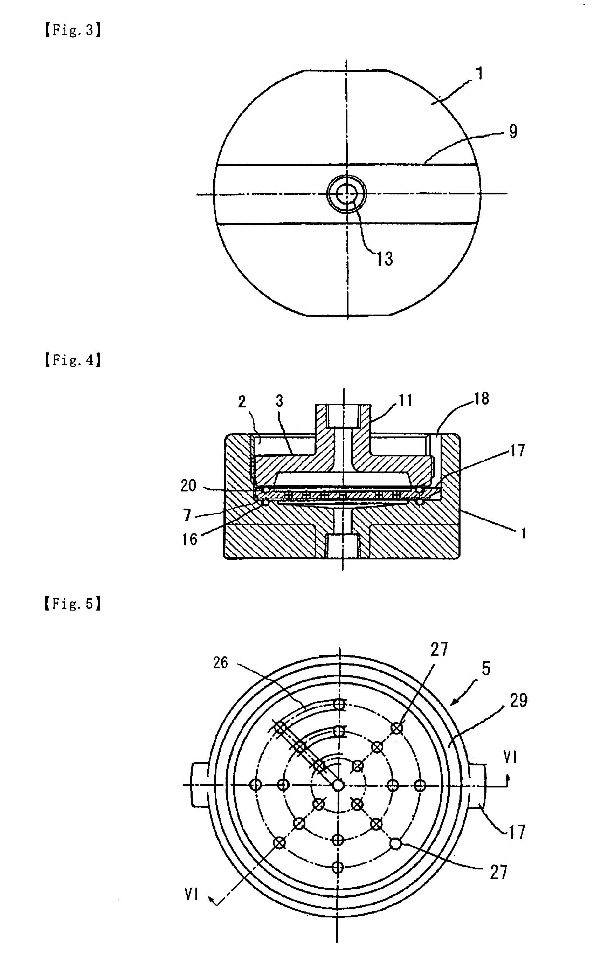

The opening portion 2 of the bowl 1 has a circular-cylindrical inner wall 7 and a bottom portion. The bottom portion has a central portion that downwardly gently converges in the form of a funnel toward the discharging port 13 as well as an annular flat peripheral portion that supports the peripheral portion of the filter plate 5. In that flat peripheral portion, there is provided a circumferential groove that receives an elastic O-ring 16 for performing seal. As illustrated in Fig. 2, in an upper side portion of a circular-cylindrical inner wall 7 of the bowl 1 there is formed a female screw 21, which is screw engaged with a male screw 19 that is provided on an outer peripheral surface of the head 3. Further, at opposite positions that sandwich the diameter of the circular-cylindrical inner wall 7 from both sides there are formed vertical guide grooves (vertical grooves) 18, 18 having received therein tabs 17, 17 of the filter plate 5. As illustrated in Fig. 3, on the underside of the bowl 1 there is formed a plate-like protrusion 9, which, when fastening the head 3 to the bowl 1 or detaching the head 3 from the bowl 1, serves as a finger or tool engager.

The head 3 is circular-cylindrical and its outer-peripheral portion has the male screw 19 that is screw engaged with the female screw 21 of the bowl 1. The inner end portion of the supplying port 15 is expanded to form a space 43 communicated with a filtering surface of the filter plate 5. As described above, a wall surrounding the space 43, in order to air-tightly and liquid-tightly seal the peripheral portion of the filter plate 5, composes a shaped-like-an-annulus convex pressing portion 23 that presses the peripheral portion of the filter plate 5 toward the bottom portion of the opening portion. The bottom surface of the convex pressing portion 23 is a horizontal surface, which presses, via an O-ring, the filter plate 5 as later described, to thereby perform prescribed seal. On an upper end surface of the head 3 there is formed a plate-like protrusion 11 that, when screw fastening, serves as a hand engager (or tool engager).

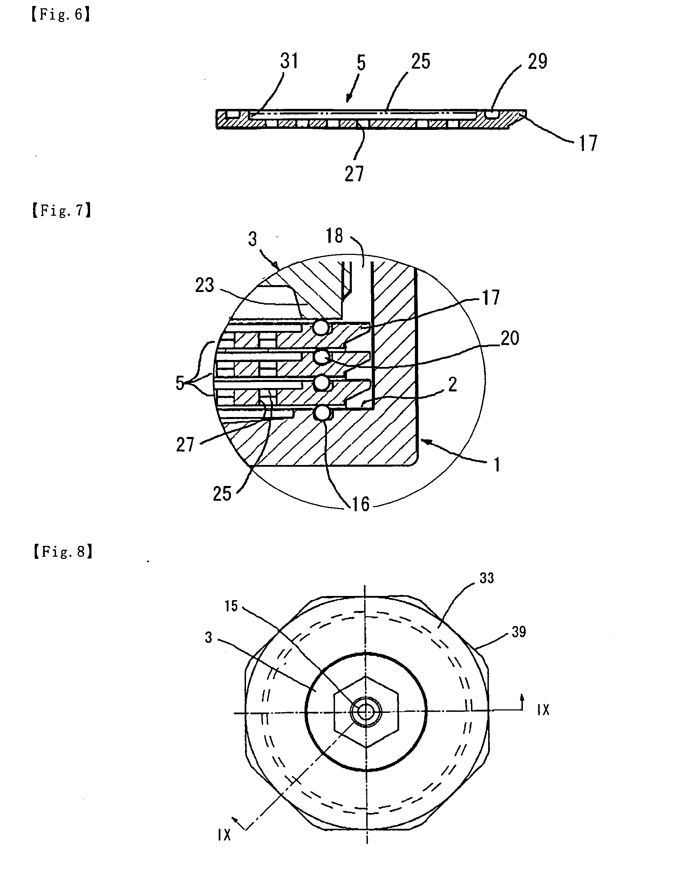

As illustrated in Fig. 5 or 6, the filter plate 5 has a number of pores 27. The filter plate 5 has provided therein a recessed portion 31, and, on the surface thereof, there is retained a separation membrane 25 (that is indicated in phantom line). In this case, the separation membrane 25 preferably is secured to the surface of the filter plate 5 by thermal fusion. In a case where using a plurality of filter plates, the recessed press insertion portion 31 forms a distribution flow passage with respect to the separation membrane 25. Further, in the surface of the recessed press insertion portion 31 there are formed from a number of the pores 27 a number of grooves 26 radially or in the form of a mesh to thereby increase the effective filter area. In the peripheral portion of the filter plate 5, there is provided a circumferential groove 29, and an O-ring 20 for sealing is accommodated there. By doing so, as illustrated in Fig. 2, it is possible to make seal between the outer-peripheral portions of one or more filter plates 5 as well as between these outer-peripheral portions and the convex pressing portion 23.

At opposite two positions that sandwich the diameter of the filter plate 5 from both sides thereof, there are formed tabs 17 and 17, which are fitted into the guide grooves 18 of the bowl 1. Thereby, the filter plate 5 is not only positioned at a prescribed location, but, when fastening the head 3, the filter plate 5 is prevented from being rotated.

Prior to performing the filtering, separating, and refining operations or to evaluating and measuring a filtering membrane, the O-ring 16 is fitted into the peripheral groove of the bottom surface of the opening portion 2 of the bowl 1; subsequently, one, or a plurality of filter plates 5, having the O-rings 20 fitted into their peripheral grooves 29 are aligned with each other by using the tabs 17 and vertical groove 18, then they are dropped into the opening portion 2 of the bowl 1. Subsequently, the male screw 19 on the outer peripheral surface of the head 3 is screw engaged with the female screw 21 of the bowl 1. Then, by rotating the plate-like protrusion 11 by using a finger or a tool, the head 3 is fastened into the opening portion 2 of the bowl 1. As a result of this, the convex pressing portion 23 of the head 3 presses the peripheral portion of the filter plate 5, thereby liquid-tight and air-tight seals are obtained through the O-rings 16 and 20 between their relevant members. At this time, as in Fig. 2, a plurality of filter plates 5 can be assembled-in together, or, as in Fig. 4, a single piece of filter plate 5 can also be assembled-in. Like this, the filtering device of the present invention has a highly flexible structure that, according to the intended purpose, enables assembling a single, or a plurality of, filter plates 5 in.

Incidentally, since the filtering device according to this embodiment is simple in structure, it has an advantage in that its manufacturing cost is low. However, since frictional slide occurs between the convex pressing portion 23 of the head 3 and the O-ring 20, there is a slight degree of inconvenience in the respect that fastening by screw needs to be carefully done. This will be improved in the next embodiment.

### Second embodiment

Next, a second embodiment of the present invention will be explained with reference to Figs. 8 to 14. Although this embodiment is more complex than the filtering device according to the preceding embodiment, it has the advantage that air-tightness and liquid-tightness are easily obtained. In each of these relevant figures, for the members corresponding to those of the filtering device of the first embodiment, there are used the same reference numerals.

The filtering device according to this embodiment includes a bowl 1 having in its lower surface a discharging port 13 from which a filtered liquid is discharged and having an opening portion 2 or a recessed portion in its upper surface, one or more filter plates 5 that are inserted into the opening portion 2 and are supported by a bottom portion of the opening portion, a head 3 that is equipped with a shaped-like-an-annulus convex pressing portion 23 which in order to air-tightly or liquid-tightly seal the peripheral portion of the filter plate 5 presses this peripheral portion of the filter plate 5 toward the bottom portion of the opening portion, as well as with a raw liquid supplying port 15, and a locking nut 33 for fixing the head 3 to the bowl 1.

Regarding the filter plate 5, since it has the same structure as that of the first embodiment, in the following description reference will be made thereto only as the occasion demands. On the other hand, regarding the bowl 1, in this example, it has no female screw in its circular-cylindrical inner wall, and, regarding the head 3, in this example, it has no male screw on its outer-peripheral surface.

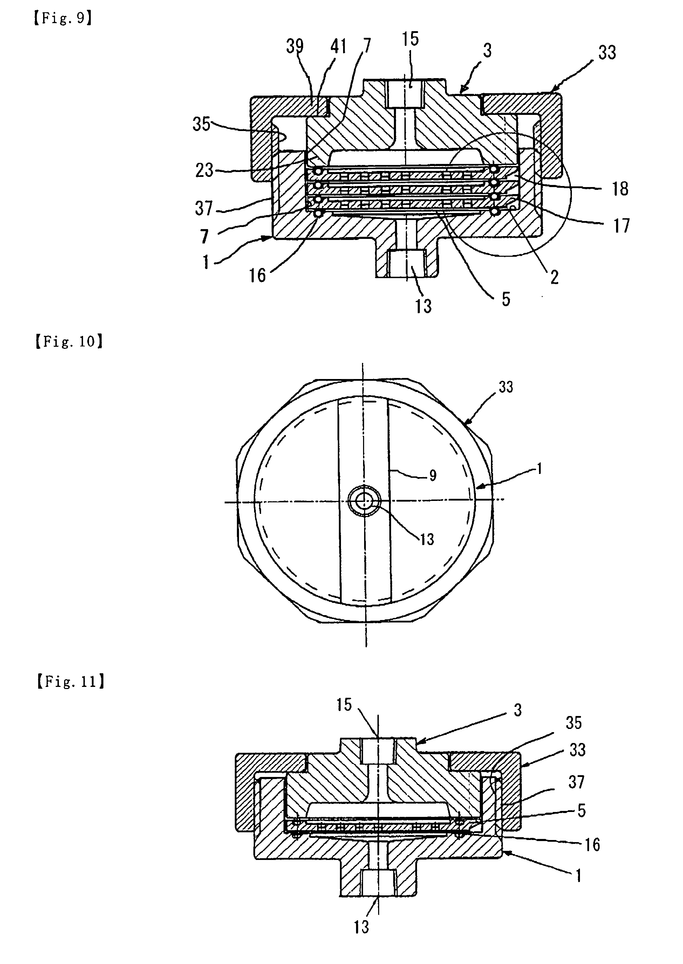

Referring to Fig. 9, Fig. 10, and Fig. 12 which is an enlarged view of the interior of the circle of Fig. 9, the opening portion 2 of the bowl 1 has a circular-cylindrical inner wall 7, a central portion that downwardly gently converges in the form of a funnel toward the discharging port 13, and an annular flat peripheral portion that supports the peripheral portion of the filter plate 5. In that peripheral portion, there is provided a circumferential groove that receives an elastic O-ring 16 for performing seal. As illustrated in Fig. 9, in an upper side portion of a circular-cylindrical surface of the bowl 1 there is formed a male screw 37, which is screw engaged with a female screw 35 that is provided in an inner peripheral surface of the locking nut 33. Further, at opposite positions that sandwich the diameter of the circular-cylindrical inner wall 7 from both sides there are formed vertical guide grooves 18, 18 having received therein tabs 17, 17 (refer to Fig. 5) of the filter plate 5 in the same manner as in the case of Fig. 2. On the underside of the bowl 1 there is formed a plate-like protrusion 9, which, when fastening the head 3 to the bowl 1 or detaching the head 3 from the bowl 1, serves as a finger or tool engager.

Referring to Fig. 9, Fig. 13, and Fig. 14, the inner end portion of the supplying port 15 of the head 3 is expanded to form a space 43 communicated with a filtering surface of the filter plate 5. A wall surrounding the space , as stated above, composes a shaped-like-an-annulus convex pressing portion 23 that presses, via an O-ring 20, the peripheral portion of the filter plate 5 toward the bottom portion of the opening portion 2. The diameter of the head 3 is slightly smaller than the diameter of the circular-cylindrical inner wall 7 of the bowl 1 so that the head 3 can be fitted thereinto. On the outer periphery of the head 3, in order to prevent the rotation thereof, there are provided tabs 45, 45 that fit in the vertical grooves 18, 18 of the bowl 1. On the upper-surface outer-peripheral portion of the head 3 there is formed a shoulder portion 41 that is contacted with an acting portion 39 of the locking nut 33 so as to receive the fastening force therefrom. For this reason, the filter plate 5 can receive from the convex pressing portion 23 of the head 3 a fastening force that vertically acts (in the axial direction of the filtering device).

The structure of the filter plate 5 is the same as that which was explained in the first embodiment in connection with Figs. 5 and 6.

Next, referring to Figs. 8 and 9, the locking nut 33 has an annular flat portion having an acting portion 39 that collision contacts with the shoulder portion 41 of the head 3 and a circular-cylindrical outer-peripheral wall having formed in its inner-peripheral surface a female screw 35. The female screw 35 is screw engaged with a male screw 37 formed on the outer-peripheral surface of the bowl 1. The acting portion 39 of the nut 33 is formed into a polygonal configuration in order to cause it to serve as a finger or tool engager.

Prior to performing the filtering or separating operation, or to evaluating and measuring a filtering membrane, the O-ring 16 is fitted into the peripheral groove of the bottom surface of the opening portion 2 of the bowl 1; subsequently, one, or a plurality of filter plates 5, having the O-rings 20 fitted into their peripheral grooves 29 are aligned with each other by using the tabs 17 and vertical groove 18, then they are dropped into the opening portion 2 of the bowl 1. Subsequently, the head 3 is fastened into the opening portion 2 of the bowl 1 in a state where the tab 45 is in alignment with the vertical groove 18. Subsequently, the locking nut 33 is applied onto the head 3, then the female screw 35 of the locking nut is screw engaged with the male screw 37 of the bowl 1, and then the locking nut is rotated by using a finger or tool, thereby the both screws are forcedly engaged together. As a result of this, via the acting portion 39 and shoulder portion 41, the fastening force is applied to the peripheral portion of the filter plate 5 and head via the convex pressing portion 23. As a result of this, the peripheral portion of the filter plate 5 is liquid-tightly sealed through the O-rings 16 and 20. Even in this example, as in Fig. 9, a plurality of filter plates 5 can be assembled-in together, or, as in Fig. 11, a single piece of filter plate 5 can also be assembled-in. Like this, the filtering device of the present invention has a highly flexible structure that, according to the intended purpose, enables assembling a single, or a plurality of, filter plates 5 in.

### Third embodiment

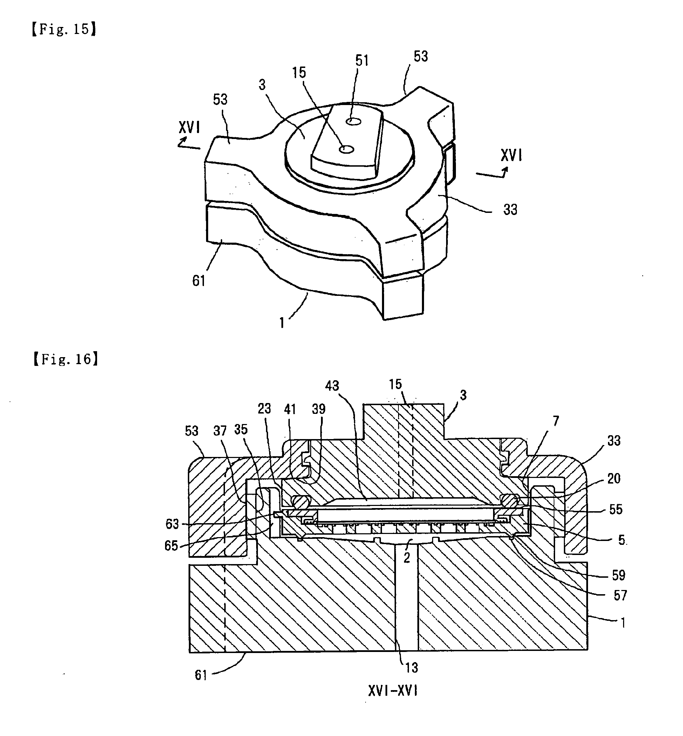

Next, a third embodiment of the invention will be explained with reference to Figs. 15 to 23. Although this embodiment has similarity to the second embodiment that was explained in connection with Figs. 8 to 14, it differs in the structure of seal portion of the filter plate, the structure of finger engager of the filter plate, and the structure of the locking nut. In each, as well, of these figures, the members corresponding to those of the filtering device according to the second embodiment are denoted by like reference numerals.

Fig. 15 is a perspective view of a filtering device according to this embodiment, and Fig. 16 is a sectional view taken along a line XVI-XVI of Fig. 15. The filtering device of this embodiment includes a bowl 1 having an opening portion or a recess 2 and a discharging port 13 from which a filtered liquid is discharged, one ormore filter plates 5 that are inserted into the opening portion 2 and are supported by a bottom portion of the opening portion, a press ring 55 that is used to press the upper surface of the filter plate 5 or a filtering membrane that has been disposed there, a head 3 that is equipped with a circular-cylindrical or shaped-like-an-annulus convex pressing portion 23 which in order to air-tightly or liquid-tightly seal the peripheral portion of the press ring 55 presses this peripheral portion of the press ring 55 toward the bottom portion of the recess 2, as well as with a raw liquid supplying port 15, and a locking nut 33 for fixing the head to the bowl 1. Incidentally, in this example, there is provided a gas vent 51 for drawing out air bubbles and dissolved gas in the raw liquid.

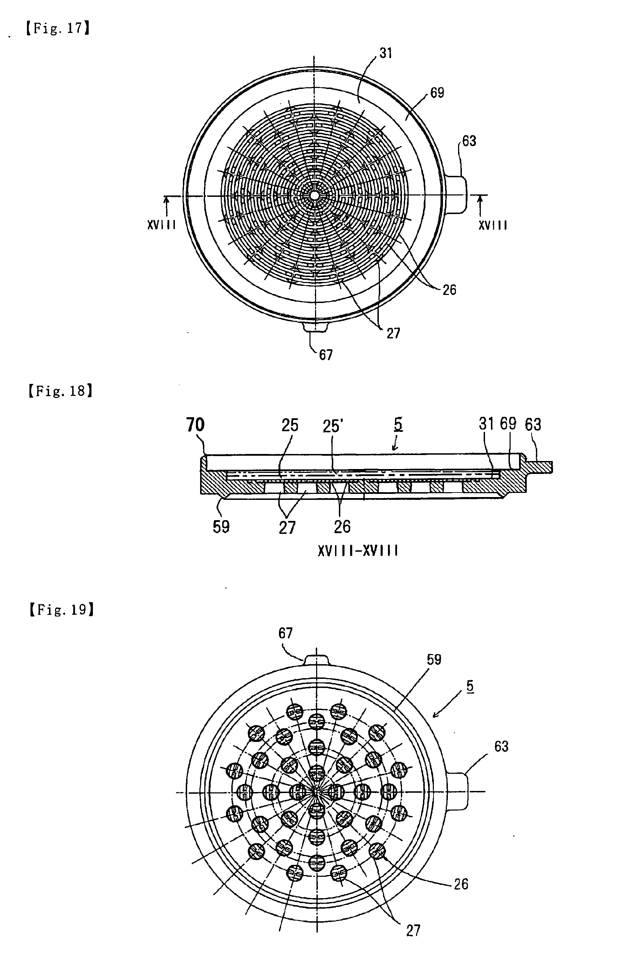

The opening portion 2 of the bowl 1 has a circular-cylindrical inner wall 7, a central portion that downwardly gently converges in the form of a funnel toward the discharging port 13, and an annular flat peripheral portion that supports the peripheral portion of the filter plate 5. This peripheral portion has provided therein a circumferential groove 57 for performing seal. In this groove there is fitted an inverted-triangular-in-section circumferential protrusion 59 (refer to Fig. 18) that protrudes from the bottom surface of the filter plate 5 to make sealed attachment between these two components. On the upper side portion of the circular-cylindrical outer-peripheral surface of the bowl 1 there is formed a male screw 37, which is screw engaged with a female screw 35 formed in the inner-peripheral surface of the locking nut 33. Further, in part of the circular-cylindrical inner wall there is provided a vertical guide groove 65 in which there is received a finger-engaged tab 63 (refer to Figs. 17 to 19) of the filter plate 5. On account of the structure of the filter plate as later described, the finger-engaged tab 63 is isolated from the passage for raw liquid and a filtered liquid, therefore, even when the finger-engaged tab 63 exists, the filtering liquid is prevented from being contaminated. Accordingly, according to this model, assembling-in, and replacing, of the filterplatebecome easy. On each filterplate, there is provided a direction tab 67 illustrated in Figs. 17 to 19, and, correspondingly thereto, in the inner wall 7 of the bowl 1, there is formed a vertical groove (not illustrated) in the same manner as in the case of Fig. 2. Therefore, which surface of the filter plate 5 goes upside can always be set right.

As illustrated in Fig. 16, the inner end portion of the supplying port 15 of the head 3 is expanded to form a space 43 communicated with a filtering surface of the filter plate 5. A surrounding wall of the space, as stated above, composes a shaped-like-an-annulus convex pressing portion 23 that presses, via a press ring 55 and via the O-ring 20, the peripheral portion of the filter plate 5 toward the bottom portion of the opening portion 2. The diameter of the head 3 is slightly smaller than the diameter of the circular-cylindrical inner wall 7 of the bowl 1 so that the lower side portion of the head 3 can be fitted there. On the upper-surface outer-peripheral portion of the head 3 there is formed a shoulder portion 41 that is contacted with an acting portion 39 of the locking nut 33 so as to receive the fastening force therefrom. For this reason, the filter plate 5 and press ring 55 can receive from the convex pressing portion 23 of the head 3 a fastening force that vertically acts (in the axial direction of the filtering device).

The locking nut 33 has an annular flat portion having an acting portion 39 that collision contacts with the shoulder portion 41 of the head 3 and a circular-cylindrical outer-peripheral wall having formed in its inner-peripheral surface a female screw 35. The female screw 35 is screw engaged with a male screw 37 formed on the outer-peripheral surface of the bowl 1. As in Fig. 15, the locking nut 33, by having handles 53 at three positions, equi-angularly spaced away from one another, of the outer-peripheral portion thereof, makes it easy to fasten the locking nut 33 and detach the same. On the peripheral portion, as well, of the bowl 1, there are provided similar handles 61. In a case where an appropriate anti-rotation member is provided, the bowl 1 may not have provided thereon any handle 61.

The head 3 and the locking nut 33 canmake relative rotations between the two. Therefore, when the head 3 is loaded on the filter plate 5 and press ring 55 via the O-ring 20 and then the locking nut 33 is fastened, since only the locking nut 33 is rotated in a state where the head 3 is frictional engaged with the press ring 55, the sealing means between each two of the head 3, filter plate 5, and press ring 55 is prevented from making a slip. As a result of this, reliable sealing strength is obtained.

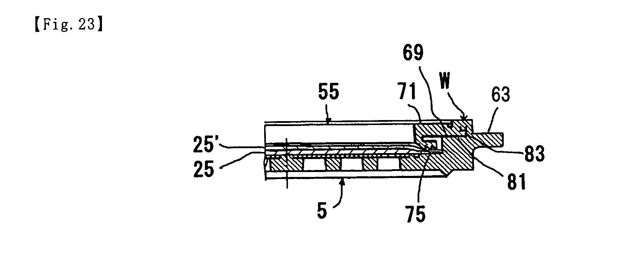

The filter plate 5 of this third embodiment is illustrated in Fig. 17 (plan view), Fig. 18 (a sectional view taken along a line XVIII-XVIII of Fig. 17), and Fig. 19 (bottom surface view) . The filter plate 5 has a recessed press insertion portion, and on the inner bottom of this recessed press insertion portion there is provided a flat retaining surface 31, and at the peripheral portion of the flat retaining surface 31 there is formed a pore-less flat surface. On the retaining surface 31 there is retained at least one sheet of separation membrane (In the figure there are retained two sheets of separation membranes 25, 25' indicated in chain line). To cause the separation membranes 25, 25' to be retained, the press ring 55 is inserted into the recessed press-insertion portion of the filter plate 5. And, through a sealing concentric protrusion 75 that protrudes from the bottom surface of the outer-peripheral portion thereof, the peripheral portion of the separation membrane is pressed against the flat surface of the peripheral portion of the retaining surface 31. As will be explained in connection with Fig. 23, a peripheral edge portion 79 of the press ring 55 and a peripheral edge portion 70 of the filter plate are fused to each other. To this end, the both members 5 and 55 are fabricated from thermoplastic material.

In a case where one, or both, of the separation membranes 25, 25' are of a type of being thermally fusible to the filter plate 5, the separation membrane may be thermally fused to the filter plate 5. For example, in a case where combining a thermally fusible polyethylene-made separation membrane and a thermally non-fusible fluorine resin-made separation membrane, the polyethylene separation membrane 25 is fused to the filter plate 5. Then, the fluorine resin separation membrane 25' is simply placed thereupon, and the peripheral portion is pressed against the flat peripheral portion of the retaining surface 31 of the filter plate 5 by the press ring 55.

The upper surface of the filter plate 5 is configured in the form of a grating, and, in the surface 31 of the recessed press insertion portion, there are formed a number of grooves 26 that are communicated with each other in the form of meshes between the grating components to increase the effective filtering area. Also, on the lower surface side thereof, there are provided a number of pores 27 that are uniformly distributed so as to collect the filtered liquid that comes out into the grooves 26. The recessed press insertion portion forms a distribution flow passage, led into the separation membrane 25, in a case where using a plurality of filter plates.

As already stated before, on the bottom surface of the outer-peripheral portion of the filter plate 5, there protrudes an inverted-triangular circumferential protrusion 59. The circumferential protrusion 59 has the same height over the entire circumference and its tip end falls within the same flat surface. The circumferential protrusion 59 has a width greater than that of the circumferential groove 57 formed in the bowl 1 and has a height that, when interfitting the both, does not allow the protrusion 59 to reach the bottom of the circumferential groove 57. By doing so, sealing by elastic deformation can be realized between the circumferential protrusion 59 and the upper edges of the inner and outer walls.

On the filter plate 5, further, as already stated, there are formed a finger-engaged tab 63 and a direction tab 67, and the finger-engaged tab 63 is fitted into the guide groove 18 of the bowl 1 while, on the other hand, the direction tab 67 is fitted into its corresponding direction-regulating groove. As a result of this, detachment and attachment of the filter plate 5 become easy, the filter plate 5 can be mounted rightly in terms of its obverse / reverse surface, and, further, it is prevented from being rotated when fastening the head 3 in.

The filter plate 5 further has a flat stepped portion 69, in the recessed press insertion portion, which surrounds the retaining surface 31. This stepped portion 69 receives the peripheral portion bottom surface 81 of the press ring 55 as will be described later to thereby retain the press ring and, in addition, it also serves as means for preventing the buckling of the elastic sealing member 77 of the press ring. The peripheral edge portion 70 of the filter plate 5 receives the peripheral edge portion 79 of the press ring 55 fitted into the inside of that peripheral edge portion 70, thereby the both are fused together.

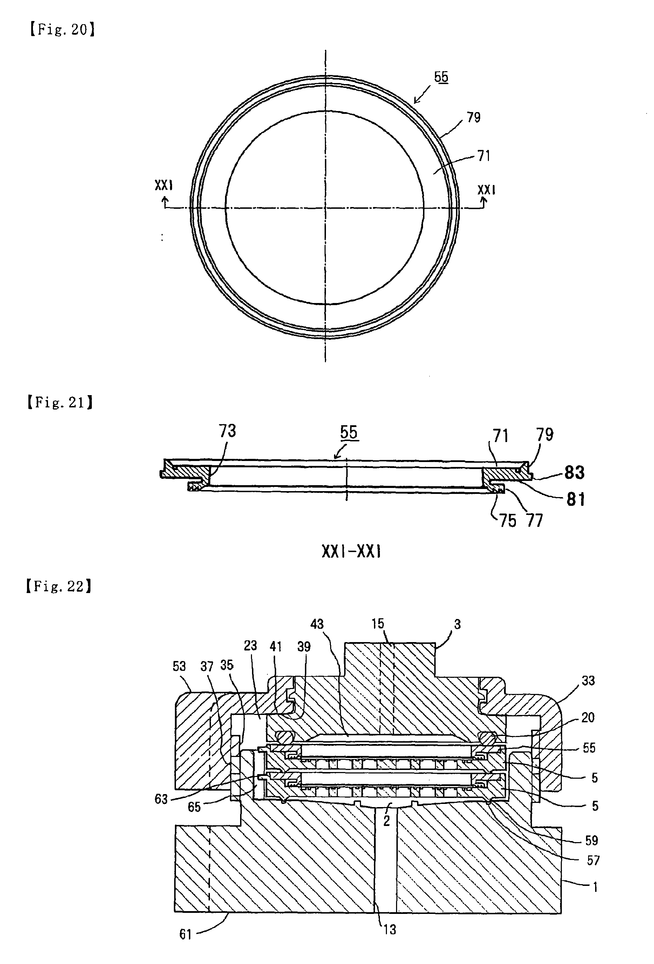

The press ring 55 of this third embodiment is illustrated in Fig. 20 (plan view) and Fig. 21 (a sectional view taken along a line XXI-XXI of Fig. 20).

On the press ring 55 there is formed at the upper surface side a flat surface 71, and, there is formed an elastic sealing portion 77 that has a sealing portion comprised of three (in general a plurality of) inverted-triangular concentric protrusions 75 that protrudes from the bottom surface thereof. And, the upper and lower surfaces thereof are communicated with each other through an opening 73 to compose a liquid distribution flow passage. The tip ends of the three protrusions are within the same flat plane. The flat surface 71 serves as a sealing surface for the O-ring 20 (Fig. 16) , or serves as a sealing surface for the circumferential protrusion 59 of another filter plate 5.

The press ring 55 has a peripheral edge portion 79 that protrudes upwards. This peripheral edge portion 79 has approximately the same height as that of the peripheral edge portion 70 of the filter plate 5 when the press ring 55 has been inserted, via the separation membranes 25 and 25', into the recessed portion of the filter plate 5. The outer periphery of the press ring 55 has a protruding edge 83 whose diameter is fitted to the inner-peripheral surface of the peripheral edge portion 70 of the filter plate 5. For this reason, between the peripheral edge portion 79 of the press ring 55 and the peripheral edge portion 70 of the filter plate 5 there is formed a clearance that permits molten resin to flow in. When in this condition a hot plate is applied to over these peripheral portions and heating is performed under pressure, the both peripheral edges are molten together to flow into that clearance, thereby the both are firmly fused together to retain the separation membranes with high strength.

The peripheral portion bottom surface 81 of the press ring 55 is engaged with the flat stepped portion 69 provided on the filter plate 5 to retain the both members 5 and 55 in a fixed relationship to each other and also to simultaneously prevent buckling of the elastic sealing portion 77 having the concentric protrusion 75.

In this embodiment, the filter plate 5, separation membranes 25, 25' , and press ring 55 is made up into a part that has been integrated together beforehand.

Fig. 23 illustrates a state wherein the separation membranes 25, 25' are retained on the filter plate 5 and this resulting structure is pressed using the press ring 55 and the both members are thermally fused and thereby integrated together into a filter plate unit.

As already explained above, the press ring 55 is inserted into the recessed press insertion portion of the filter plate 5, and, using the sealing concentric protrusion 75 that protrudes from the bottom surface of the peripheral portion of the outer-peripheral portion thereof, the peripheral portion of the separation membrane is pressed against the flat surface of the peripheral portion of the retaining surface 31. Also, the stepped portion 69 of the filter plate 5 supports the peripheral portion bottom surface 81 of the press ring 55. Between the peripheral edge portion 79 of the press ring 55 inserted into the recessed press insertion portion of the filter plate 5 and the inner-peripheral surface of the peripheral edge portion 70 of the filter plate 5 a clearance exists due to the existence of the protruding edge 83 that is located around the press ring. Therefore, when a hot plate is applied to over the peripheral edge portion 79 and peripheral edge portion 70 to press, the peripheral edge portions 70 and 79 are molten together and squeezed and thereby fused together. Also, the resin that has been molten flows into the clearance between the peripheral edge portions 70 and 79 to form a fused portion W that has been flattened as illustrated in Fig. 23. The upper surface of this flattened fused portion W nearly coincides with a flat surface 71.

Fig. 22 illustrates a case in the filtering device of the third embodiment two or more filter plates 5 are used. In this example, two sheets of filter plate and two pieces of press ring 55 are used. And, sealing between the filter plates 5 and 5 is realized in such a manner that the circumferential protrusion 59 of the bottom surface of the filter plate on the upper side abuts on the flat surface 71 of the lower side press ring 55, whereby the sealing force is exerted by the fastening force of the locking nut 33.

Prior to performing the filtering or separating operation or evaluating and measuring the filtering membrane, it is assumed that the separation membrane 25 and/ or 25' be assembled into the filter plate 5 and press ring 55, as illustrated in Fig. 23, and thereby formed into an integral filter plate unit.

Subsequently, using a finger-engaged tab 63, vertical guide groove 65, and direction tab 67, the filter plate 5 is dropped onto the bottom surface of the opening portion 2 of the bowl 1. As a result of this, the circumferential protrusion 59 of the bottom surface of the filter plate 5 is fitted into the circumferential groove 57 of the bowl 1 and is sealed with respect thereto. If necessary, another filter plate 5 further is mounted together with the press ring 55. As a result of this, the circumferential protrusion 59 of the upper side filter plate 5 abuts on the flat surface 71 of the lower side press ring 55. Finally, the head 3 is loaded on the bowl 1 together with the locking nut; the lower end portion of the head 3 is inserted into the opening portion 2 of the bowl 1; the female screw 35 of the locking nut 33 is screw engaged with the male screw 37 of the bowl 1; and, by using the handle 53 or; according to the cases, utilizing the handle 61, the locking nut 33 is rotated with the hands or tools. Thereby, the head 3 is screwed into the bowl 1. By this, the fastening force, via the acting portion 39 and shoulder portion 41, is applied to the peripheral portion of the head of the filter plate via the convex pressing portion 23, thereby the O-ring 20, three concentric protrusions 75 of the elastic sealing portion 77, the circumferential protrusion 59, and circumferential groove 57 liquid-tightly seal the peripheral portion of the filter plate 5. As a result of this, the flow passage of the raw liquid and filtered liquid is completely isolated from the guide groove, etc. Incidentally, as illustrated in Fig. 16, a single sheet of filter plate 5 can be assembled, or, as illustrated in Fig. 22, a plurality of filter plates can also be assembled. Like this, the filtering device of the presented invention has a highly flexible structure that according to the use purpose enables assembling a single, or a plurality of, sheets of filter plates 5.

As described above, according to the invention, the flow passage of the liquid to be processed that is used to test the separation membrane is of the simplest straight-line (so-called "inline" type) type. Namely, the structure is of the most simplified type. In addition, in spite thereof, since the separation membrane through which the raw liquid is going to be filtered is mounted to the flow passage in a direction substantially perpendicular with respect thereto, it is possible to provide a filtering device in which the filtering efficiency is good; and attachment / detachment of the separation membrane for testing the performance of this separation membrane are easy and replacement thereof can be performed quickly.

### BRIEF DESCRIPTION OF THE DRAWINGS

Fig. 1 is a plan view of a filtering device according to a first embodiment of the present invention;
Fig. 2 is a sectional view of the filtering device;
Fig. 3 is a bottom view of the filtering device;
Fig. 4 is a sectional view illustrating one form of use of the filtering device;
Fig. 5 is a plan view of a filter plate common to two embodiments of the present invention;
Fig. 6 is a sectional view taken along a line VI-Vi of the filter plate of Fig. 5;
Fig. 7 is a partly enlarged view of the filtering device of Fig. 2;
Fig. 8 is a plan view of a filtering device according to a second embodiment of the present invention;
Fig. 9 is a sectional view of the filtering device;
Fig. 10 is a bottom surface view of the filtering device;
Fig. 11 is a sectional view illustrating one form of use of the filtering device;

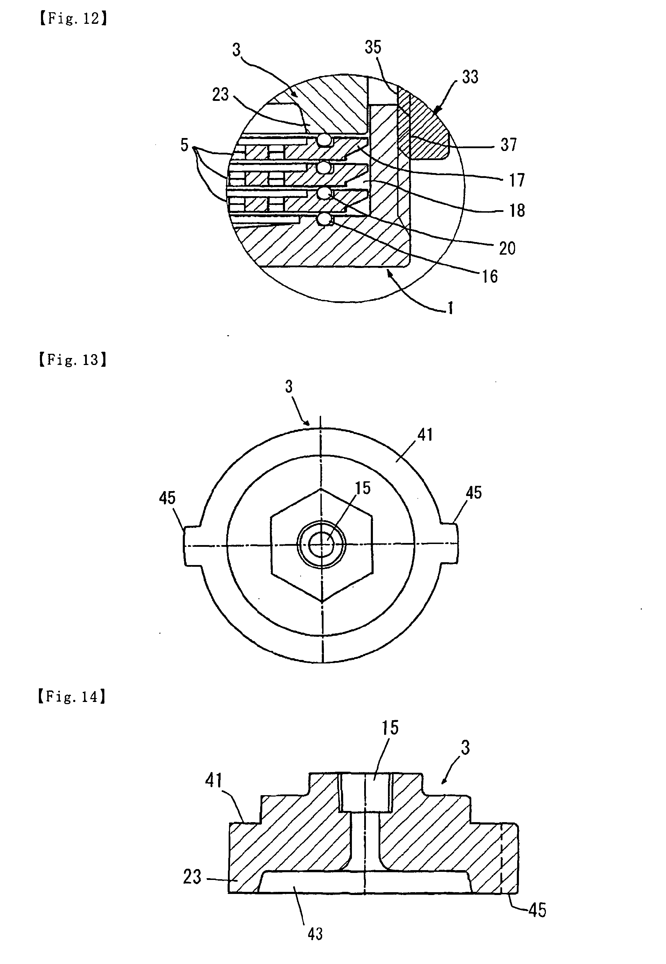

Fig. 12 is a partly enlarged view of the filtering device;
Fig. 13 is a plan view of a head, as a single unity, of the filtering device;
Fig. 14 is a sectional view of the head, as a single unity, of the filtering device;
Fig. 15 is a perspective view of a filtering device according to a third embodiment of the present invention;
Fig. 16 is a sectional view taken along a line XVI-XVI of the filtering device;
Fig. 17 is a plan view of a filter plate used in the filtering device;
Fig. 18 is a sectional view taken along a line XVIII-XVIII of the filter plate of Fig. 17;
Fig. 19 is a bottom surface view of the filter plate;
Fig. 20 is a plan view of a press ring;
Fig. 21 is a sectional view taken along a line XXI-XXI of the press ring of Fig. 20;
Fig. 22 is a sectional view similar to Fig. 16, illustrating the filtering device, according to the third embodiment, in which two sheets of filter plates 5 are used; and
Fig. 23 is a partial sectional view illustrating a filter plate unit having integrally formed therein a filter plate, separation membrane, and press ring.

### DESCRIPTION OF THE NUMERAL REFERENCES

- 1: bowl
- 2: opening portion
- 3: head
- 5: filter plate
- 7: circular-cylindrical inner wall
- 9: plate-like protrusion
- 11: plate-like protrusion
- 13: filtered liquid discharging port
- 15: raw liquid supplying port
- 16: O-ring
- 17: tab
- 18: guide groove
- 19: male screw
- 20: O-ring
- 21: female screw
- 23: convex pressing portion
- 25: separation membrane
- 26: groove
- 27: a number of pores
- 29: circumferential groove
- 31: recessed portion
- 33: locking nut
- 35: female screw
- 37: male screw
- 39: acting portion
- 41: shoulder portion
- 43: space
- 45: tab
- 51: gas vent
- 53: handle
- 55: press ring

- 57: circumferential groove
- 59: circumferential protrusion
- 61: handle
- 63: finger-engaged tab
- 65: guide groove
- 67: direction tab
- 69: stepped portion
- 70: peripheral edge portion
- 71: flat surface
- 75: concentric protrusion
- 77: elastic sealing portion
- 79: peripheral edge portion
- 81: peripheral portion bottom surface
- 83: protruding edge

## Claims

1. A filtering device comprising: a bowl having a discharging port on one side thereof and an opening portion, on the other side thereof, that is communicated with said discharging port; at least one piece of filter plate having retained therein or secured thereto a separation membrane permitting a raw unprocessed liquid to filter therethrough and having openings that permit said raw unprocessed liquid or a filtered liquid to pass therethrough, said at least one piece of filter plate being accommodated within said opening portion of said bowl; a head having on one side thereof a protruding pressing portion that presses said filter plate from one side thereof to prevent said filtered liquid from being leaked and having on the other side thereof a raw unprocessed liquid supplying port; and pressing means that presses said head toward said bowl.

2. The filtering device according to claim 1, wherein said pressing means is a female screw and male screw that are formed in said bowl and said head and are brought into screw engagement with each other and that are rotated relatively to each other to perform said pressing.

3. The filtering device according to claim 1 or 2, wherein said filter plate that has had said separation membrane retained therein or secured thereto is loaded in such a manner that more than one said filter plate is stacked one over another.

4. A filtering device comprising; a bowl having a discharging port on one side thereof and an opening portion, on the other side thereof, that is communicated with said discharging port; at least one piece of filter plate having retained therein or secured thereto a separation membrane permitting a raw unprocessed liquid to filter therethrough and having openings that permit said raw unprocessed liquid or a filtered liquid to pass therethrough, said at least one piece of filter plate being accommodated within said opening portion of said bowl; a head having on one side thereof a protruding pressing portion that presses said filter plate from one side thereof to prevent said filtered liquid from being leaked and having on the other side thereof a raw unprocessed liquid supplying port; and a locking nut that presses said head toward said bowl in their axial direction.

5. The filtering device according to claim 4, wherein each of said bowl and said locking nut has provided thereon screw portions that are engaged with each other and, by rotating each of them relatively to each other to press said head toward said bowl.

6. The filtering device according to claim 4 or 5, wherein said filter plate that has had said separation membrane retained therein or secured thereto is loaded in such a manner that more than one said filter plate is stacked one over another.

7. The filtering device according to claim 2 or 5, wherein on the outside surface on one side of said bowl there is provided a plate-like protrusion which a finger is to be engaged with.

8. The filtering device according to claim 2, wherein on the outside surface on the other side of said head there is provided a plate-like protrusion which a finger is to be engaged with.

9. The filtering device according to claim 4 or 5, wherein said locking nut has finger-engaged handles at three positions of its outer-peripheral portion.

10. The filtering device according to claim 1 or 4, wherein said filter plate has a circumferential protrusion, having a prescribed height, on a bottom surface thereof and, on the other hand, an inner bottom of said opening portion of said bowl has a circumferential groove that receives said circumferential protrusion, thereby pressing said filter plate against said bowl to thereby perform sealing.

11. The filtering device according to claim 1 or 4, wherein a press ring having on an underside thereof at least one line of concentric protrusion is positioned on an upper surface of said at least one filter plate; on the upper surface side of said filter plate there is provided a first flat surface extending over the entire circumference; and said concentric protrusion of said press ring is pressed onto said first flat surface of said filter plate to thereby perform sealing.

12. The filtering device according to claim 11, wherein said press ring has a second flat surface on an upper surface side thereof; and onto said second flat surface there is pressed a circumferential protrusion, having a prescribed height, which is provided on a lower surface side of said filter plate disposed on an upper side of said second flat surface, thereby seal is effected, or said protruding pressing portion of said head is pressed via an O-ring, thereby seal is effected.

13. The filtering device according to claim 1 or 4, wherein on an outer periphery of said filter plate there is provided a finger-engaged tab; and, correspondingly thereto, said bowl has provided therein a guide groove for reception therein of said finger-engaged tab.

14. The filtering device according to claim 11 or 12, wherein said filter plate has a first peripheral edge portion that surrounds said first flat surface; and said press ring has a second peripheral edge portion that surrounds said second flat surface, whereby, when said press ring has been accommodated into a recessed press insertion portion of said filter plate, the device is constructed so that said first and second peripheral edge portion may be fused to each other.
